# EUROPEAN PATENT APPLICATION

(11) **EP 4 557 149 A1**
(43) Date of publication of application: **21.05.2025**
(21) Application number: 22951137.3
(22) Date of filing: 14.07.2022
(51) Int. Cl.: G06F 21/64

(54) **PROOF GENERATION PROGRAM, PROOF GENERATION METHOD, AND INFORMATION PROCESSING DEVICE**

(71) Applicant: Fujitsu Limited, Kawasaki-shi, Kanagawa 211-8588 (JP)
(72) Inventor: MIYAMAE, Takeshi, Kawasaki-shi, Kanagawa 211-8588 (JP)
(74) Representative: Hoffmann Eitle
(86) International application number: PCT/JP2022/027677
(87) International publication number: WO 2024/013923

(57) **Abstract**

A proof generation program causes a computer to execute a process of generating, for each process included in a supply chain, zero-knowledge proof that indicates validity of a cumulative value obtained by accumulating a value of each process from the most upstream process to the process and information regarding the cumulative value, and causing a blockchain to record the zero-knowledge proof and the information regarding the cumulative value.

## Description

### TECHNICAL FIELD

The present invention relates to a proof generation program, a proof generation method, and an information processing apparatus.

### BACKGROUND ART

Conventionally, in traceability management in a supply chain, it is known to apply a distributed ledger technology using a blockchain and a technology of managing a smart contract in which a transaction condition is described in a distributed ledger.

### CITATION LIST

### PATENT DOCUMENT

Patent Document 1: Japanese Laid-open Patent Publication No. 2019-074910

### SUMMARY OF INVENTION

### TECHNICAL PROBLEM

In recent years, environmental problems such as climate change, industrial water pollution, mass use of water, and the like have come into focus, and participants in the supply chain need to be encouraged to change their consciousness and modify their behavior to reduce environmental loads. As a mechanism therefor, a mechanism is conceivable in which a consideration based on an environmental value of a product is returned from consumers to the supply chain, and the consideration is distributed according to a value of each process in the supply chain by a smart contract managed in the blockchain.

However, according to this mechanism, when a supplier included in the supply chain conceals trail information to be a basis of a value of a process, the validity of the value of the process performed by the supplier becomes unclear.

In one aspect, an object of the present invention is to prove validity of a value of a process while trail information is concealed.

### SOLUTION TO PROBLEM

In one aspect, a proof generation program causes a computer to execute a process of generating, for each process included in a supply chain, zero-knowledge proof that indicates validity of a cumulative value obtained by accumulating a value of each process from the most upstream process to the process and information regarding the cumulative value, and causing a blockchain to record the zero-knowledge proof and the information regarding the cumulative value.

Each of the above processing may be a functional unit or each procedure that implements each of the above processing, or may be a computer-readable storage medium that stores a program for causing a computer to execute each processing.

### ADVANTAGEOUS EFFECTS OF INVENTION

Validity of a value of a process is proved while trail information is concealed.

### BRIEF DESCRIPTION OF DRAWINGS

FIG. 1 is a diagram illustrating an exemplary system configuration of a proof generation system.
FIG. 2 is a diagram for explaining concealment of trail information and cumulative values.
FIG. 3 is a diagram for explaining a hardware configuration of a client node.
FIG. 4 is a diagram for explaining a function of each device included in the proof generation system.
FIG. 5 is a sequence diagram for explaining operation of the proof generation system.
FIG. 6 is a diagram for specifically explaining the operation of the proof generation system.
FIG. 7 is a diagram for explaining a proof generation unit.

### DESCRIPTION OF EMBODIMENTS

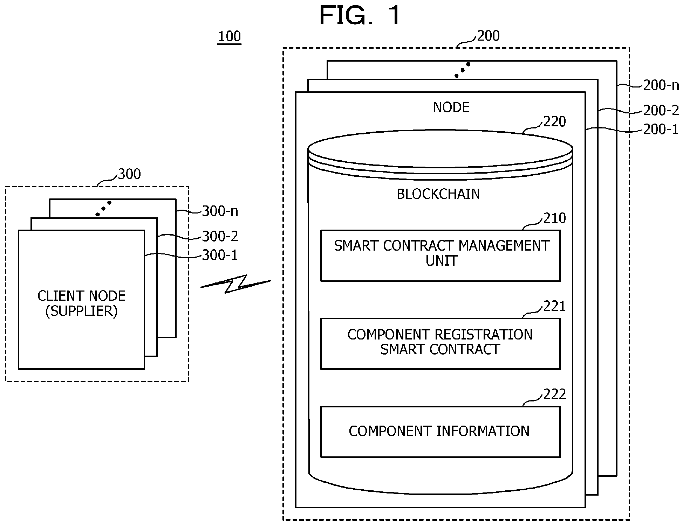

Hereinafter, an embodiment will be described with reference to the drawings. FIG. 1 is a diagram illustrating an exemplary system configuration of a proof generation system.

A proof generation system 100 according to the present embodiment proves validity of a value for each process even when trail information for each process of a certain product in a supply chain related to the product is concealed.

More specifically, the proof generation system 100 according to the present embodiment proves, in a state where trail information managed by individual suppliers is concealed, validity of a value of a component to be referred to when a consideration returned to the value of the product is distributed to the suppliers of individual components included in the product.

The supply chain in the present embodiment means a series of processes in manufacturing processes from procurement of raw materials and components of the product to manufacturing, inventory management, sales, and delivery. Furthermore, the value of each component of the product manufactured by the supply chain in the present embodiment is an example of a value of a process of manufacturing a component among the manufacturing processes included in the supply chain.

Furthermore, the value of the component in the present embodiment is assumed to be an example of an environmental value generated in the process of manufacturing the component. The environmental value may be, for example, an index indicating a degree of contribution to environmental maintenance or reduction in environmental loads.

The proof generation system 100 according to the present embodiment includes one or more nodes 200-1, 200-2, ..., and 200-n, and one or more client nodes 300-1, 300-2, ..., and 300-n. In the following descriptions, the nodes 200-1, 200-2, ..., and 200-n will be referred to as a node 200 when they are not distinguished, and the client nodes 300-1, 300-2, ..., and 300-n will be referred to as a client node 300 when they are not distinguished.

The node 200 and the client node 300 in the present embodiment may be common information processing apparatuses. The node 200 and the client node 300 are coupled to each other via a network, and are communicable with each other. Furthermore, a plurality of the nodes 200 is distributed ledger nodes included in a blockchain system, and is coupled to each other by a peer to peer (P2P) scheme. The client node 300 in the present embodiment may be used by each of the suppliers included in the supply chain.

The node 200 in the present embodiment includes a blockchain 220.

The blockchain 220 includes a smart contract management unit 210, a component registration smart contract 221, and component information 222.

The smart contract management unit 210 manages a smart contract stored in the blockchain 220.

In response to a request from the client node 300, the component registration smart contract 221 according to the present embodiment stores, in the blockchain 220, the component information 222 regarding a component manufactured by a supplier corresponding to the client node 300.

More specifically, the component registration smart contract 221 receives, from the client node 300, cumulative value proof (zero-knowledge proof) proving validity of the cumulative value (cumulative value of the supplier) of the component manufactured by the supplier corresponding to the client node 300 and a request for registering a cumulative value commitment, verifies the cumulative value proof, and then records, as the component information 222, the cumulative value proof and the cumulative value commitment in the blockchain 220. Details of the cumulative value proof and the cumulative value commitment will be described later.

In the following descriptions, in the supply chain, a process (component) upstream of a certain process (component) may be referred to as an upstream process (upstream component), and a process (component) downstream of a certain process (component) may be referred to as a downstream process (downstream component).

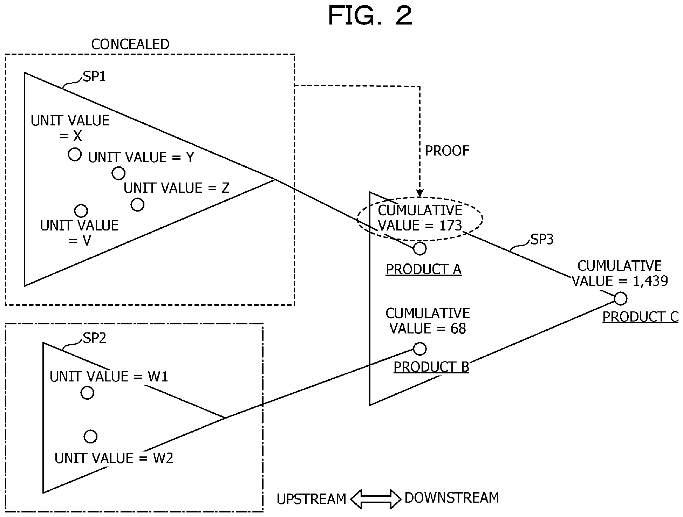

Hereinafter, concealment of the trail information and cumulative values will be described with reference to FIG. 2. FIG. 2 is a diagram for explaining the concealment of the trail information and the cumulative values.

In FIG. 2, a supplier SP1, a supplier SP2, and a supplier SP3 included in a supply chain for manufacturing a certain product will be described as an example.

The supplier SP1 and the supplier SP2 are suppliers one upstream of the supplier SP3 in the supply chain. Furthermore, the supplier SP1 manufactures and supplies a component A to the supplier SP3, and the supplier SP2 manufactures and supplies a component B to the supplier SP3. Furthermore, the supplier SP3 manufactures a product C from the component A and the component B.

Here, it is assumed that a consideration is returned from a consumer to a product (finished product) manufactured in the supply chain including the suppliers SP1 to SP3.

In this case, for example, a consideration to be distributed to the supplier SP3 is determined based on a cumulative value of the supplier SP3 and a unit value of the supplier SP3.

Thus, in order to distribute an appropriate consideration to the supplier SP3, the cumulative value of the supplier SP3 and the unit value of the supplier SP3 need to be valid values.

The cumulative value of the supplier SP3 is a value obtained by adding a unit value of an upstream component of the supplier SP3 and the unit value of the supplier SP3. In other words, the cumulative value of the supplier SP3 is a value obtained by adding the unit values of all components upstream of the supplier SP3 and the unit value of the supplier SP3.

Here, the unit values of the individual suppliers are calculated based on the trail information managed by the individual suppliers with their own client nodes 300. Thus, when each of the suppliers discloses the trail information in the blockchain 220, validity of the unit value and the cumulative value of the supplier is indicated.

On the other hand, there may be a supplier that does not disclose the trail information in the blockchain 220 and manages it only with the client node 300 as confidential information.

In the present embodiment, when the supplier conceals the trail information, the cumulative value proof proving the validity of the cumulative value calculated by the supplier is recorded in the blockchain 220 along with the cumulative value commitment. As a result, the validity of the cumulative value of the supplier is proved, whereby a consideration may be appropriately distributed to the supplier even when the supplier conceals the trail information.

In the example of FIG. 2, each of the supplier SP1, the supplier SP2, and the supplier SP3 conceals the trail information.

Accordingly, each of the supplier SP1, the supplier SP2, and the supplier SP3 needs to prove the validity of the cumulative value thereof for other suppliers. Note that, in the present embodiment, it is assumed that the supplier that conceals the trail information notifies a supplier one downstream thereof of the cumulative value of the supplier. Furthermore, the supplier SP3 will be described in FIG. 2 as an example.

The client node 300 of the SP3 is notified of cumulative value 173 by the client node 300 of the supplier SP1, and is notified of cumulative value 68 by the client node 300 of the supplier SP2.

Furthermore, the client node 300 of the supplier SP3 calculates a unit value of the supplier SP3, and adds the unit value, the cumulative value 173 of the supplier SP1, and the cumulative value 68 of the supplier SP2, thereby calculating a cumulative value of the supplier SP3.

Here, the supplier SP3 proves the validity of the cumulative value of the supplier SP3 for other suppliers in a state where the trail information, the unit value, and the cumulative value of the supplier SP3 are concealed.

Specifically, in the client node 300 managed by the supplier SP3, cumulative value proof proving the validity of the cumulative value of the supplier SP3 and information regarding the cumulative value are generated. The generated information regarding the cumulative value is a cumulative value commitment for committing the cumulative value.

Then, in response to an operation from the supplier SP3, the client node 300 of the supplier SP3 transmits the cumulative value proof and the cumulative value commitment to the node 200.

Upon reception of the cumulative value proof and the cumulative value commitment from the client node 300, the node 200 starts the component registration smart contract 221 with the smart contract management unit 210. The component registration smart contract 221 verifies the cumulative value proof, and if the validity of the cumulative value commitment is verified, records the cumulative value proof and the cumulative value commitment in the blockchain 220 as the component information 222.

The cumulative value proof in the present embodiment is, for example, zero-knowledge proof. As the zero-knowledge proof, for example, a non-interactive zero-knowledge proof is used.

The zero-knowledge proof is a technique for proving that "a proposition is true" without notifying information other than "the proposition is true". That is, the component registration smart contract 221 verifies that, without knowing the cumulative value of the supplier SP3, the cumulative value commitment of the supplier SP is a valid value from the cumulative value proof and the cumulative value commitment generated from the information that only the supplier SP3 may know.

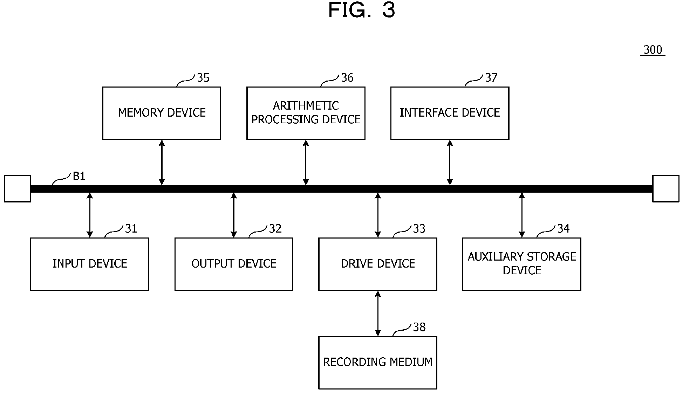

Next, a hardware configuration of the client node 300 according to the present embodiment will be described with reference to FIG. 3. FIG. 3 is a diagram for explaining the hardware configuration of the client node.

The client node 300 according to the present embodiment is an information processing apparatus including an input device 31, an output device 32, a drive device 33, an auxiliary storage device 34, a memory device 35, an arithmetic processing device 36, and an interface device 37 that are coupled to each other by a bus B1.

The input device 31 is a device for inputting various types of information, and the output device 32 is a device for outputting various types of information. The interface device 37 includes a local area network (LAN) card and the like, and is used for connection to a network.

A proof generation program included in the client node 300 is at least a part of various programs included in the client node 300.

Those programs are provided by, for example, distribution of a storage medium 38, download from a network, or the like. Furthermore, as the storage medium 38 that records those programs, various types of storage media may be used such as a recording medium that optically, electrically, or magnetically records information, such as a compact disc read only memory (CD-ROM), a flexible disk, or a magneto-optical disk, a semiconductor memory that electrically records information, such as a ROM or a flash memory, and the like.

Furthermore, when the storage medium 38 recording those is set in the drive device 33, the proof generation program is installed from the storage medium 38 to the auxiliary storage device 34 via the drive device 33. The proof generation program downloaded from the network is installed to the auxiliary storage device 34 via the interface device 37.

The auxiliary storage device 34 stores the installed program, and also stores needed files, data, and the like. When the client node 300 is activated, the memory device 35 reads various programs from the auxiliary storage device 34, and stores them. Then, the arithmetic processing device 36 executes various types of processing to be described later in accordance with the programs stored in the memory device 35.

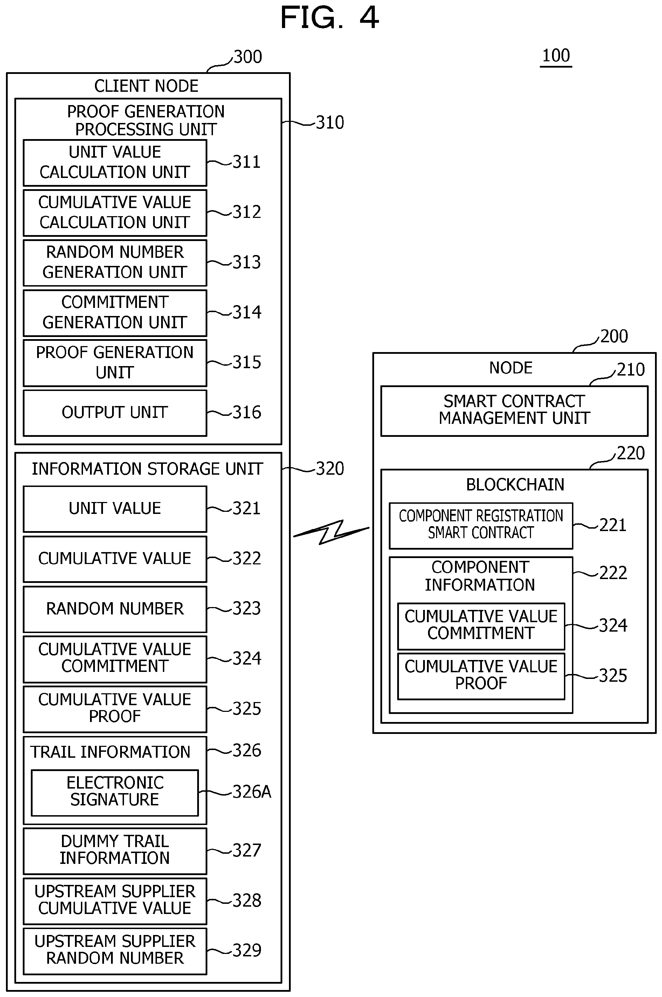

Next, functions of individual devices included in the proof generation system 100 according to the present embodiment will be described with reference to FIG. 4. FIG. 4 is a diagram for explaining the functions of the individual devices included in the proof generation system.

First, functions of the client node 300 will be described. The client node 300 includes a proof generation processing unit 310 and an information storage unit 320. The proof generation processing unit 310 is implemented by, for example, the arithmetic processing device 36 included in the client node 300 executing the proof generation program stored in the memory device 35 or the like. The information storage unit 320 is implemented by, for example, the memory device 35, the auxiliary storage device 34, or the like.

The proof generation processing unit 310 includes unit value calculation unit 311, a cumulative value calculation unit 312, a random number generation unit 313, a commitment generation unit 314, a proof generation unit 315, and an output unit 316.

The information storage unit 320 stores a unit value 321, a cumulative value 322, a random number 323, a cumulative value commitment 324, cumulative value proof 325, trail information 326, dummy trail information 327, an upstream supplier cumulative value 328, and an upstream supplier random number 329.

In the information storage unit 320, the cumulative value commitment 324 and the cumulative value proof 325 are recorded in the blockchain 220 of the node 200. In other words, the cumulative value commitment 324 and the cumulative value proof 325 are information published in the proof generation system 100.

In the information storage unit 320, the cumulative value 322 and the random number 323 are information to be notified only to the client node 300 managed by the supplier one downstream of the supplier that manages the client node 300. In the information storage unit 320, the unit value 321 and the trail information 326 are information managed only by the client node 300.

Therefore, among the pieces of information stored in the information storage unit 320, the unit value 321, the cumulative value 322, the random number 323, and the trail information 326 are pieces of confidential information.

The dummy trail information 327 stored in the information storage unit 320 is information to be used in the processing of the proof generation processing unit 310, and is information provided to each client node 300 in advance.

The upstream supplier cumulative value 328 is the cumulative value 322 of the supplier one upstream notified from the client node 300 managed by the supplier one upstream of the supplier that manages the client node 300. The upstream supplier random number 329 is the random number 323 of the supplier one upstream notified from the client node 300 managed by the supplier one upstream of the supplier that manages the client node 300.

The same number of the upstream supplier cumulative value 328 and the upstream supplier random number 329 as the number of suppliers one upstream of the supplier that manages the client node 300 are stored in the information storage unit 320. In other words, regarding the upstream supplier cumulative value 328 and the upstream supplier random number 329, when there is a plurality of upstream components one upstream, the upstream supplier cumulative value 328 and the upstream supplier random number 329 are stored in the information storage unit 320 for each upstream component.

The upstream supplier cumulative value 328 and the upstream supplier random number 329 are not also published in the proof generation system 100.

The unit value calculation unit 311 calculates the unit value 321 of a process performed in the supplier that manages the client node 300. Specifically, the unit value calculation unit 311 calculates the unit value using the trail information 326 stored in the information storage unit 320. The unit value 321 is determined in the process performed in the supplier that manages the client node 300. The calculated unit value 321 is stored in the information storage unit 320.

Hereinafter, the trail information 326 in the present embodiment will be described. The trail information 326 is a trail indicating that a process has been performed. Specifically, the trail information 326 is a power consumption reduction amount for each manufacturing process of a component manufactured by a supplier, for example. The power consumption reduction amount is reduced power obtained by comparing the power consumption when the component is previously manufactured with the power consumption when the same component is manufactured this time.

Furthermore, the power consumption reduction amount, which is the trail information 326 in the present embodiment, includes an electronic signature 326A of a meter that measures power consumption, for example. With the trail information 326 including the electronic signature 326A, it is proved that the trail information 326 is correct information.

The unit value calculation unit 311 calculates an environmental value generated in the component based on the power consumption when the component is previously manufactured including the electronic signature 326A and the power consumption when the same component is manufactured this time including the electronic signature 326A, and sets it as a unit value.

Note that the trail information 326 is not limited to the power consumption. The trail information 326 may be different for each component, and may be various values measured in each process, for example. Furthermore, in the present embodiment, the value used as the trail information 326 is assumed to be a value with which the environmental value increases as this value increases.

Note that, while the value of the component is set as the environmental value in the present embodiment, it is not limited to this. For example, information indicating performance, durability, or the like of the component may be used as the trail information 326, and the performance, durability, or the like of the component may be used as the value of the component.

The cumulative value calculation unit 312 adds the unit value 321 stored in the information storage unit 320 and the upstream supplier cumulative value 328 to calculate the cumulative value 322 of the supplier that manages the client node 300. The calculated cumulative value 322 is stored in the information storage unit 320.

The random number generation unit 313 generates the random number 323 for the cumulative value 322 to generate the cumulative value commitment 324. The random number 323 is stored in the information storage unit 320.

The commitment generation unit 314 calculates the cumulative value commitment 324, which is a value of a commitment function for the cumulative value 322. The cumulative value commitment 324 is transmitted to the node 200 along with the cumulative value proof 325 to be described later.

Note that the cumulative value commitment 324 may not be changed after being generated once by combining blockchains. Furthermore, the cumulative value commitment 324 is generated before the cumulative value proof 325 is generated, and is used to verify the cumulative value proof 325.

The proof generation unit 315 generates the cumulative value proof 325 that proves that the cumulative value 322 is a valid value. The cumulative value proof 325 is generated using the random number 323, the trail information 326, the upstream supplier cumulative value 328, and the upstream supplier random number 329 stored in the information storage unit 320. Details of the cumulative value proof 325 will be described later.

The generated cumulative value proof 325 is transmitted to the node 200 along with the cumulative value commitment 324 stored in the information storage unit 320.

Furthermore, the proof generation unit 315 according to the present embodiment is implemented by a program designed in advance so as not to depend on the number of suppliers one upstream of the supplier that manages the client node 300. In other words, the proof generation unit 315 is a program designed not to depend on the number of components one upstream.

Specifically, the proof generation unit 315 is designed to be capable of inputting a larger number of cumulative values than the number of the upstream supplier cumulative values 328 stored in the information storage unit 320, and the dummy trail information 327 in which the value of the cumulative value is "0" is used to generate the cumulative value proof 325. Details of the proof generation unit 315 will be described later.

The output unit 316 outputs (transmits), to the node 200, the cumulative value commitment 324 and the cumulative value proof 325 generated by the proof generation processing unit 310. Furthermore, the output unit 316 transmits the cumulative value 322 calculated by the proof generation processing unit 310 and the random number 323 to the client node 300 of the supplier one downstream of the supplier that manages the client node 300.

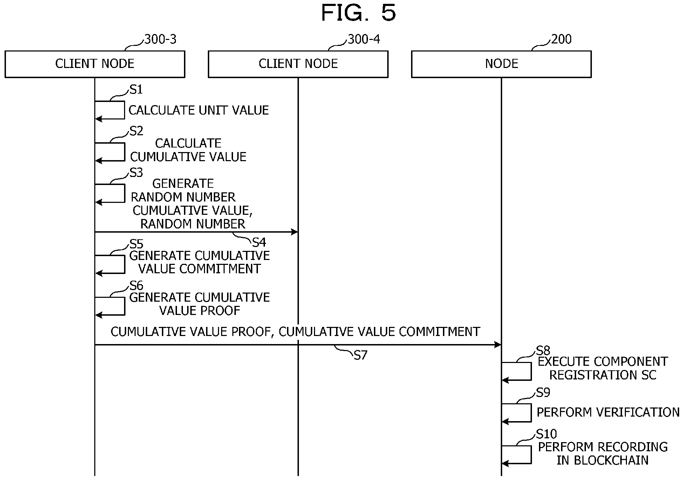

Next, operation of the proof generation system 100 will be described with reference to FIG. 5. FIG. 5 is a sequence diagram for explaining the operation of the proof generation system. In the example of FIG. 5, a client node 300-3 is managed by the supplier SP3, and a client node 300-4 is a client node 300 managed by the supplier SP one downstream of the supplier SP3.

In the proof generation system 100 according to the present embodiment, the client node 300-3 receives an operation from the supplier SP3, calculates the unit value 321 with reference to the information storage unit 320 using the unit value calculation unit 311 of the proof generation processing unit 310, and stores it in the information storage unit 320 (step S1).

Next, using the cumulative value calculation unit 312, the client node 300-3 adds the unit value 321 and the upstream supplier cumulative value 328 stored in the information storage unit 320, calculates the cumulative value 322 of the component manufactured by the supplier SP3, and stores it in the information storage unit 320 (step S2).

Next, using the random number generation unit 313, the client node 300-3 generates the random number 323 for the cumulative value 322 for generating the cumulative value commitment 324, and stores it in the information storage unit 320 (step S3). Next, using the output unit 316, the client node 300-3 notifies the client node 300-4 of the cumulative value 322 and the random number 323 (step S4).

Next, using the commitment generation unit 314, the client node 300-3 calculates the cumulative value commitment 324, which is a value of a commitment function for the cumulative value 322, by using the random number 323, and stores it in the information storage unit 320 (step S5).

Next, using the proof generation unit 315, the client node 300-3 generates the cumulative value proof 325 by using the upstream supplier cumulative value 328 and the upstream supplier random number 329, and stores it in the information storage unit 320 (step S6).

Next, using the output unit 316, the client node 300-3 transmits the cumulative value proof 325 and the cumulative value commitment 324 to the node 200 (step S7).

Upon reception of the cumulative value proof 325 and the cumulative value commitment 324 from the client node 300-3, the node 200 causes the smart contract management unit 210 to execute the component registration smart contract 221 (step S8).

Upon acquisition of the cumulative value proof 325 and the cumulative value commitment 324, the component registration smart contract 221 verifies the cumulative value proof 325 (step S9). Next, the component registration smart contract 221 records, as the component information 222, the cumulative value proof 325 and the cumulative value commitment 324 in the blockchain 220 (step S10).

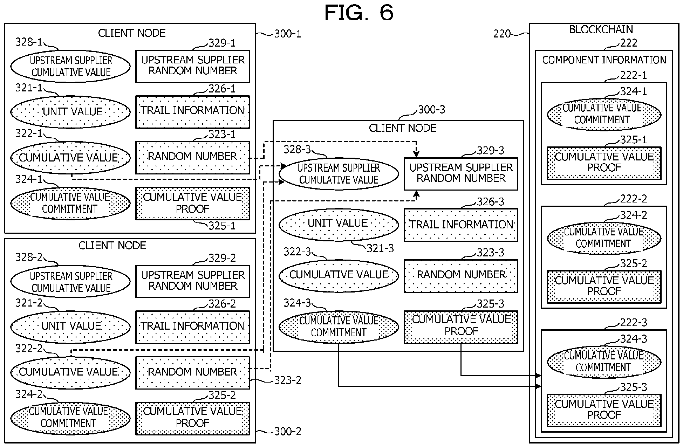

Next, the cumulative value proof 325 in the present embodiment will be described with reference to FIG. 6. FIG. 6 is a diagram for specifically explaining the operation of the proof generation system.

In the example of FIG. 6, it is assumed that the suppliers one upstream of the supplier SP3 that manages the client node 300-3 are the supplier SP1 and the supplier SP2, the client node 300-1 is managed by the supplier SP1, and the client node 300-2 is managed by the supplier SP2.

In other words, the client nodes 300-1 and 300-2 are managed by the supplier SP1 and the supplier SP2 that perform a process one upstream of the process performed by the supplier SP3.

In the following descriptions, a process one upstream of a certain process may be expressed as a process performed immediately before the certain process, and a process one downstream of a certain process may be expressed as a process performed immediately after the certain process.

The client node 300-1 retains a unit value 321-1 of the supplier SP1, a cumulative value 322-1, a random number 323-1, a cumulative value commitment 324-1, cumulative value proof 325-1, trail information 326-1, an upstream supplier cumulative value 328-1, and an upstream supplier cumulative value 328-1. Note that the dummy trail information 327 is not illustrated in FIG. 6.

Among them, the cumulative value commitment 324-1 and the cumulative value proof 325-1 are recorded in the blockchain 220 of the node 200. Furthermore, the client node 300-3 is notified of the cumulative value 322-1 and the random number 323-1.

The client node 300-2 retains a unit value 321-2 of the supplier SP2, a cumulative value 322-2, a random number 323-2, a cumulative value commitment 324-2, cumulative value proof 325-2, trail information 326-2, an upstream supplier cumulative value 328-2, and an upstream supplier cumulative value 328-2.

Among them, the cumulative value commitment 324-2 and the cumulative value proof 325-2 are recorded in the blockchain 220 of the node 200. Furthermore, the client node 300-3 is notified of the cumulative value 322-1 and the random number 323-1.

The client node 300-3 retains an upstream supplier cumulative value 328-3 and an upstream supplier random number 329-3.

The upstream supplier cumulative value 328-3 includes the upstream supplier cumulative value 328-1 and the upstream supplier cumulative value 328-2.

Here, the client node 300-3 performs the process illustrated in FIG. 5 upon reception of an operation instructing registration of the cumulative value proof from the supplier SP3.

Specifically, the client node 300-3 calculates a unit value 321-3 from trail information 326-3, and calculates a cumulative value 322-3 from the upstream supplier cumulative value 328-3 and a unit value 321-3.

Furthermore, the client node 300-3 calculates a cumulative value commitment 324-3 from the cumulative value 322-3 and a random number 323-3, and generates cumulative value proof 325-3 using the cumulative value 322-3 and the upstream supplier random number 329-3.

Here, the cumulative value proof 325-3 in the present embodiment will be described. The cumulative value proof 325-3 proves the following propositions.
- The cumulative value commitment 324-1 and the cumulative value commitment 324-2 can be correctly generated from the cumulative value 322-1 and the cumulative value 322-2 (cumulative value calculated in the immediately preceding process) notified from the supplier SP1 and the supplier SP2, respectively, and a random number.
- The unit value 321-3 is calculated from the correct trail information 326-3 to which the electronic signature 326A is attached.
- The cumulative value 322-3 is correctly calculated from the cumulative value 322-1, the cumulative value 322-2, and the unit value 321-3.
- The cumulative value commitment 324-3 recorded in the blockchain 220 can be correctly generated from the cumulative value 322-3 and the random number 323-3.

That is, in the present embodiment, the cumulative value proof 325-3 is established if the cumulative value commitment 324-1 and the cumulative value commitment 324-2 are correct. In addition, the cumulative value commitment 324-1 and the cumulative value commitment 324-2 are ensured to be correct by the cumulative value proof 325-1 and the cumulative value proof 325-2, respectively.

As described above, in the present embodiment, when cumulative value proof (zero-knowledge proof) proving validity of a cumulative value of a certain process is generated, a cumulative value commitment verified by a smart contract using cumulative value proof (zero-knowledge proof) proving validity of a cumulative value generated in the process performed immediately before the certain process is used.

Furthermore, in the present embodiment, the component registration smart contract 221 records the cumulative value proof 325-3 in the blockchain 220 when it is verified that the cumulative value proof 325-3 is correct.

Therefore, according to the present embodiment, validity of a cumulative value calculated by a supplier may be proved even in a state where each supplier conceals trail information.

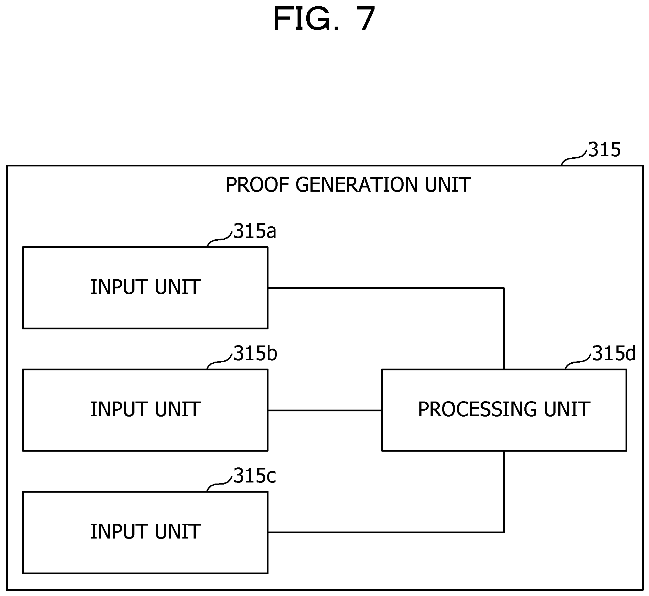

Next, the proof generation unit 315 according to the present embodiment will be described with reference to FIG. 7. FIG. 7 is a diagram for explaining the proof generation unit.

The proof generation unit 315 according to the present embodiment is a functional unit implemented by a program designed in advance, and is a circuit that generates zero-knowledge proof.

The proof generation unit 315 according to the present embodiment includes, for example, input units 315a, 315b, and 315c. Furthermore, the proof generation unit 315 includes a processing unit 315d.

The upstream supplier cumulative value 328 retained in the information storage unit 320 of the client node 300 including the proof generation unit 315 is input to each of the input units 315a, 315b, and 315c.

The processing unit 315d performs processing of generating the cumulative value proof 325 based on the upstream supplier cumulative value 328 and the like input from the input units 315a, 315b, and 315c.

The proof generation unit 315 according to the present embodiment is designed in advance such that the number of the input units is larger than the number of the upstream supplier cumulative values 328. Then, the dummy trail information 327 is input to the input unit to which the upstream supplier cumulative value 328 is not input, and the processing unit 315d is caused to process the value of the upstream supplier cumulative value 328 as "0".

Specifically, for example, it is assumed that the proof generation unit 315 illustrated in FIG. 7 is the proof generation unit 315 included in the client node 300-3.

There are two processes of the process performed by the supplier SP1 and the process performed by the supplier SP2, which are processes one upstream of the process performed by the supplier SP3 that manages the client node 300-3.

Thus, the proof generation unit 315 inputs the upstream supplier cumulative value 328-1 of the supplier SP1 to the input unit 315a, and inputs the upstream supplier cumulative value 328-2 of the supplier SP2 to the input unit 315b. Then, the proof generation unit 315 inputs the dummy trail information 327, which has the cumulative value "0", to the input unit 315c.

The dummy trail information 327 is information provided to the client node 300 in advance. In the present embodiment, as described above, the proof generation unit 315 is designed to have a larger number of input units than the number of processes (components) one upstream, and the dummy trail information 327 is input to a redundant input unit.

Therefore, according to the present embodiment, the program for implementing the proof generation unit 315 may be provided as a common program to all the suppliers included in the supply chain. In other words, according to the present embodiment, the common proof generation unit 315 may be provided to suppliers having different numbers of branches of upstream components, and each supplier does not need to design the proof generation unit 315 for each component.

As described above, according to the present embodiment, even when access to the information storage unit 320 that manages upstream components in the supply chain is limited due to privacy or the like, a supplier of a downstream component is enabled to refer to the zero-knowledge proof as the basis of the calculation and the information regarding the cumulative value.

Therefore, according to the present embodiment, each supplier included in the supply chain is enabled to prove validity of a cumulative value of an upstream component without accessing any information that the supplier of the upstream component wants to conceal.

The present invention is not limited to the embodiment specifically disclosed above, and various modifications and changes may be made without departing from the scope of the claims.

### REFERENCE SIGNS LIST

- 100: Proof generation system

- 200: Node
- 210: Smart contract management unit
- 220: Blockchain
- 221: Component registration smart contract
- 222: Component information
- 300: Client node
- 310: Proof generation processing unit
- 311: Unit value calculation unit
- 312: Cumulative value calculation unit
- 313: Random number generation unit
- 314: Commitment generation unit
- 315: Proof generation unit
- 320: Information storage unit
- 321: Unit value
- 322: Cumulative Value
- 323: Random number
- 324: Cumulative value commitment
- 325: Cumulative value proof
- 326: Trail information
- 327: Dummy trail information
- 328: Upstream supplier cumulative value
- 329: Upstream supplier random number

## Claims

1. A proof generation program that causes a computer to execute a process comprising:
generating, for each process included in a supply chain, zero-knowledge proof that indicates validity of a cumulative value obtained by accumulating a value of each process from a most upstream process to the process and information regarding the cumulative value; and
causing a blockchain to record the zero-knowledge proof and the information regarding the cumulative value.

2. The proof generation program according to claim **1,** wherein
the information regarding the cumulative value includes a cumulative value commitment for the cumulative value, and
the zero-knowledge proof is generated using trail information that includes a trail that indicates that the process has been performed and zero-knowledge proof that indicates validity of a cumulative value of a process performed immediately before the process.

3. The proof generation program according to claim 1 or 2, wherein
the zero-knowledge proof is generated by:
receiving an input of a cumulative value of a process performed immediately before the process and dummy trail information stored in advance in a storage unit; and
using a cumulative value obtained from the dummy trail information and the cumulative value of the process performed immediately before the process, with the cumulative value obtained from the dummy trail information set to zero.

4. A proof generation method that causes a computer to execute a process comprising:
generating, for each process included in a supply chain, zero-knowledge proof that indicates validity of a cumulative value obtained by accumulating a value of each process from a most upstream process to the process and information regarding the cumulative value; and
causing a blockchain to record the zero-knowledge proof and the information regarding the cumulative value.

5. An information processing apparatus comprising:
a generation unit configured to generate, for each process included in a supply chain, zero-knowledge proof that indicates validity of a cumulative value obtained by accumulating a value of each process from a most upstream process to the process and information regarding the cumulative value; and
an output unit configured to record the zero-knowledge proof and the information regarding the cumulative value in a blockchain.
